# EUROPEAN PATENT APPLICATION

(11) **EP 4 647 484 A1**
(43) Date of publication of application: **12.11.2025**
(21) Application number: 23913875.3
(22) Date of filing: 06.01.2023
(51) Int. Cl.: C12H 1/04, C07H 13/08

(54) **CONCENTRATED LIQUID TANNIC ACID SOLUTION FOR USE IN BEER, USAGE PROCESS, AND USE**

(71) Applicant: Mendes De Oliveira, Jadyr, 05688-050 Sao Paulo - SP (BR)
(72) Inventor: FURTADO PINHEIRO, Leonardo, 01331-020 São Paulo - SP (BR); MENDES DE OLIVEIRA, Jadyr, 05688-050 São Paulo - SP (BR)
(74) Representative: Tiburzi, Andrea
(86) International application number: PCT/BR2023/050005
(87) International publication number: WO 2024/145698

(57) **Abstract**

The present invention refers to a solution of liquid, concentrated and stable tannic acid for application in a brewing process for colloidal stabilization, as well as to the description of the process comprising the application of the liquid tannic acid solution in order to obtain the desired performance and technological and sensory advantages.

## Description

### FIELD OF THE INVENTION

The present invention refers to a stable concentrated liquid tannic acid solution, as well as the application of this food product during the beer production process with the aim of promoting colloidal stability.

### BACKGROUND OF THE INVENTION

Physical (colloidal) stabilization is one of the most important quality parameters for beer. It is especially affected by three major types of molecules: high molecular weight proteins, polyphenols, and polysaccharides. It can be achieved by some types of treatment, such as the use of proteolytic enzymes, protein precipitants, such as tannic acid, and protein adsorption by silicas.

The complex formed by proteins and polyphenols may initially be soluble, but with the increase in its size, it becomes insoluble, generating turbidity in the beverage. This is the main problem generated by colloidal instability, and it can occur in two ways: cold, which appears with the cooling of the product at temperatures of 0°C or below, and disappears again with reheating, and permanent. Beers with permanent turbidity remain with a "cloud" and can develop sediment over the course of their shelf life.

Some examples of technologies used to obtain a beer with colloidal stability are more detailed below.

In the application of proteolytic enzymes, the so-called proteases, among which papain is generally used, hydrolyze peptide chains and reduce the protein concentration in solution. Papain is an alkaloid enzyme extracted from papaya (*Carica papaya*), with a non-specific mechanism of action. Because of this non-specific property of the enzyme, its use is accompanied by some drawbacks: it ends up acting on all types of proteins present, including the proteins responsible for beer foam.

In addition to papain, other proteolytic enzymes can be applied, obtained from microbial sources, through advanced biotechnology techniques. As an example, we find the specific enzyme proline (endoprotease) presented in PI 0115998-4. According to this document, "a specific proline endoprotease is defined as an endoprotease that cuts proteins or peptides near or at sites where the protein or peptide contains a proline residue in its chain." These enzymes are characterized by being derived from genetically modified organisms, which is often an obstacle to use by breweries due to a consumer concern. In addition, although the negative effects on beer foam are minimized, there is still some impact on its stability.

When used in the process, the enzymes are applied directly to the production line, through a dosing pump.

Silica gel is a synthetic compound produced by the reaction of sodium silicate (Na₂SiO₃) and sulfuric acid (H₂SO₄). It acts through physical adsorption, retaining proteins responsible for the cloudiness of beer. The complexes formed by silica gel + protein are retained in the tank bottom or during filtration. However, the use of silica in the brewing process has some drawbacks. Compound dosages are high, and so there is an operational problem where large volumes of product must be loaded by brewery workers. In addition, there is a labor problem associated with this type of application: silica is a compound that, when inhaled constantly, causes a disease called silicosis. Silicosis limits the respiratory capacity of the affected professional, since silica particles accumulate in the pulmonary alveoli. As a consequence, other organic functions are affected, such as the cardiac, and can even lead to death.

Tannic acid is a water-soluble polyphenol, a natural, plant-based and non-genetically modified compound. Its molecular structure is composed of a glucose center with its hydroxyl groups attached to one or more gallic acid residues. With sufficient contact time, the use of tannic acid has equivalent efficacy to the application of silica gel. It can be dosed in the stages of mashing, boiling, maturation and/or directly in the filtration of the beer. The use of tannic acids in the beer production process generates a number of benefits, such as protein precipitation, free radical capture (antioxidant), inhibition of lipoxygenase enzymes, and chelation of metals. From the formation of hydrogen bonds with yeasts and high molecular weight proteins, which generate colloidal instability, tannic acids lead to their precipitation. In addition to decreasing turbidity, this function provides less *trub* drag in boiling by forming more compact *trub,* and increases the volumes of beer produced per filtration cycle (higher process efficiency).

In addition to the gain in quality, the application of tannic acids generates cost reductions due to the lower dosage required of the product, and environmental benefits due to the reduction of residues during filtration.

However, even though it is the most efficient alternative in promoting colloidal stability, the application of tannic acid requires the pre-dilution of the product, which is presented in powder form, in hot water (40 - 50°C), rest for total dissolution and cooling for dosage. Only after these steps have been carried out can the product be applied to the processing of beer. As a result, a series of limitations and drawbacks are generated in its use, since not all breweries have a supply point with hot water for the preparation of the solution, and there is still the risk of contamination of the solution during handling for cooling and dosing.

Some attempts to prepare solutions with tannic acid have been made, for other purposes as well, as presented in US 2 088 590, but with other chemical additives incompatible with the brewing process.

Thus, the goal of the present invention is to directly present a concentrated and stable solution of liquid tannic acid, a natural, non-genetically modified, ready-to-use product for colloidal stabilization and clarification of beer.

Advantageously, the solution can be applied in-line after cooling the wort, ensuring the chemical interaction effectively, with a better contact area between the tannic acid and the sensitive proteins present in the wort.

In addition, the liquid formulation eliminates the preparation step of the tannic acid solution, which is critical for the correct performance of the product, reducing production costs and maintaining the appropriate and desired sensory characteristics throughout its shelf life.

### OBJECTIVES OF THE INVENTION

A first objective is to provide a solution of concentrated liquid tannic acid for application in beer, a natural, plant-based and non-genetically modified, ready-to-use product, applied as a technology adjunct during the beer production process for highly efficient promotion of colloidal stabilization and clarification of cold wort and/or beer.

A second objective is to describe a process for the application of the described solution, in order to obtain better performance of the product, generating the desired technological and sensory advantages.

### BRIEF DESCRIPTION OF THE INVENTION

The first objective is achieved from the description of a formulation of a solution of liquid, concentrated and stable tannic acid, using tannic acid powder, grain alcohol and water.

The second objective is achieved by the description of process parameters and application point of the solution presented during the beer production process.

### BRIEF DESCRIPTION OF THE DRAWINGS

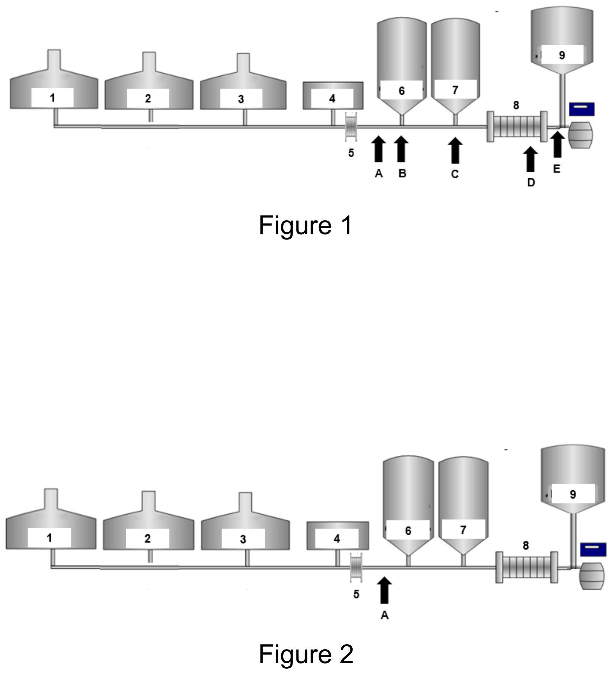

Figure 1 shows the flowchart of a beer production process with indication of application points when using proteolytic enzymes and silica gel, according to the state of the art. The steps and dosing points are defined as follows:
   1. Mash
   2. Clarification
   3. Boiling
   4. Whirlpool
   5. Cooling (Heat Exchanger)
   6. Fermentation
   7. Maturation
   8. Filtration
   9. Lung tank
      A. Dosing point of Proline-Specific Enzyme (Endoprotease)
      B. Dosing point of Proline Specific Enzyme (Endoprotease)
      C. Dosage Point of Papain Proteolytic Enzyme and Silica Gel
      D. Dosage point of Papain Proteolytic Enzyme and Silica Gel
      E. Dosage point of Papain Proteolytic Enzyme
Figure 2 shows the flowchart of the beer production process with the indication of the point of application of the liquid tannic acid solution, object of this invention. The steps and dosing point are defined as follows:
   1. Mash
   2. Clarification
   3. Boiling
   4. Whirlpool
   5. Cooling (Heat Exchanger)
   6. Fermentation
   7. Maturation
   8. Filtration
   9. Lung tank
      A. Dosing point of Liquid Tannic Acid Solution

### DETAILED DESCRIPTION OF THE INVENTION

For the purposes of definition, beer is the beverage resulting from the fermentation, from brewing yeast, of malted barley wort or malt extract, previously subjected to a cooking process with the addition of hops or hop extract, in which case a part of the malted barley or malt extract may be partially replaced by a brewing adjunct.

For definition purposes, cold wort is understood to be the wort obtained after the process of sedimentation/separation (whirlpool) and cooling (through heat exchanger), and before the start of fermentation.

Also, unless expressly stated otherwise, or in a situation in which a person skilled in the art has full capacity to discern, the bases of concentration expressed here are on a basis of weight in relation to the total weight of the solution.

A formulation of a liquid, concentrated, stable tannic acid solution for application in the cold wort during the brewing process is described here. It is a natural solution of plant origin, with high purity and non-genetically modified, in a ready-to-use version for the purpose of clarification and colloidal stabilization of wort and/or beer. In this way, the stage of preparing the solution in the beer manufacturing units is eliminated, a drawback already detailed in the description of the state of the art, in addition to the guarantee of a high-efficiency formulation without ingredients of genetically modified origin, without negative impacts on the beer foam and that guarantees the safety of the worker, since it demands low dosages and, therefore, low weight bearing requirement, and no operator exposure to inhalation of substances harmful to health.

Tannic acid is highly unstable in aqueous solution, as previously described in US 2,088,590 and known in the literature for its decomposition into free gallic acid molecules. Document BR 112021016319-0, despite referring to the application of tannic acid in fertilizers, also reveals that the mixing temperature and the time of solution preparation are important to avoid the degradation of the compound in solution, in the same way that occurs in breweries.

Surprisingly, when several types of formulations were tested in order to produce a tannic acid solution of easy application by breweries, and to improve the process and quality of the beer, it was observed that by using specific ingredients, in ranges of pre-established proportions, it was possible to stabilize tannic acid in a physical and microbiological way, without generating the unwanted decomposition of tannic acid, as already described, thus maintaining the expected performance of the stabilizer in the application.

In a preferred embodiment, the preparation of concentrated liquid tannic acid comprises the use of tannic acid powder, already used in breweries and which has the function of making chemical bonds with the sensitive proteins present in the cold wort, accelerating the sedimentation process during processing to optimize clarification and colloidal stability.

Preferably, the solution is prepared using a range of 1 to 55% grain alcohol (weight by weight), preferably 5 to 52%, more preferably 15 to 50%, which enables the liquid formulation with ranges of 10 to 70% tannic acid concentration (weight by weight), preferably 15 to 63%, more preferably 25 to 55%, maintaining physical and microbiological stability, in addition to generating viscosity and density reduction, in which concentrations are expressed by weight based on the total weight of the solution.

In a preferred embodiment, the solution containing tannic acid powder and grain alcohol is diluted in water, in a range of 1 to 55% (weight by weight), preferably 5 to 52%, more preferably 15 to 50%, where concentrations are expressed by weight based on the total weight of the solution.

The liquid composition, object of the invention, allows direct application in the process without the need for prior preparation for application, has stability in concentrations higher than those already feasible in the state of the art and immediate action in contact with sensitive proteins in the wort.

A second object of the present invention concerns process parameters and dosing point of the concentrated liquid tannic acid solution. Preferably, its dosage is carried out in a process line through a pump with flow control, after the cooling stage of the brewing wort and before inoculation of the yeast. In this way, it is possible to promote the interaction between the sensitive proteins present in the wort with the tannic acid during the entire cooling time, ensuring the contact area and dispersion of the tannic acid solution.

Preferably, the pump with flow control should be of the peristaltic type, with automation integrated into the wort cooling system.

Dosing can still be performed in other stages of the brewing process, such as mashing, boiling, maturation and filtration, but with lower efficiency or the need for higher dosage.

Preferably, the cooling of the wort should be done at temperatures between 4 and 20°C, more preferably between 7 and 18°C, and even more preferably between 9 and 15°C.

This process should be done in a time between 15 and 150 minutes, more preferably between 25 and 120 minutes, and even more preferably between 30 and 90 minutes.

Dosage values should vary according to the desired degree of stabilization of the wort, the type of final beer and parameters of the manufacturing unit. However, preferably, to obtain good performance of the tannic acid solution, a dosage of 1 to 50 g/hL, more preferably from 2 to 43 g/hL, and even more preferably from 3 to 38 g/hL, is indicated.

The following examples are intended to illustrate the present invention, but are not of any limiting nature. Accordingly, it is possible to make several modifications based on these examples without straying from the scope of the invention.

### EXAMPLES

### EXAMPLE 1

### SAMPLE PREPARATION FOR COMPARATIVE TESTING

The beer samples were produced from pure malt (100%), with the application of a specific commercial proline enzyme (endoprotease), according to the flowchart of Figure 1 and with the application of liquid tannic acid, according to the flowchart of Figure 2.

Four industrial tests were carried out, with different volumes of production and application of stabilizers for a period of 30 days. For the commercial-specific proline enzyme, dosages were used according to the manufacturer's indication (Sample 2 - 400,000 hL and Sample 4 - 800,000 hL). For the liquid tannic acid solution, object of the invention, the dosages are presented in Table 1.

**TABLE 1**

| Sample | Volume of production (hL) | Liquid tannic acid (g/hL) | Proportion of tannic acid in the formulation (%) |
|---|---|---|---|
| 1 | 400,000 | 3 | 50 |
| 3 | 800,000 | 4 | 50 |

### EXAMPLE 2

### ANALYSIS OF COLLOIDAL STABILITY IN PRODUCT APPLICATION (FORCING TEST METHODOLOGY)

In order to predict the colloidal stability of beer, the Forcing Test methodology is applied to bottled or canned beer.

The principle of the methodology is based on the fact that beer stored at high temperature for a relatively short period of time develops a turbidity very similar to the turbidity formed in the same beer, after prolonged storage at room temperature.

To perform the analysis, the following equipment was used: thermostatic bath regulated at 57 ± 1 °C, thermostatic bath regulated at 0.0 ± 0.5 °C and turbidity meter (hazemeter).

The bottled beers were placed in an upright position in the hot bath at 57 ± 1 °C, immersed to filling height and kept there for 7 days.

After the 7-day period, the bottles were first removed from the hot bath and kept at room temperature for cooling. Then, they were placed, in a vertical position, in a cold bath at 0.0 ± 0.5 °C, and maintained for 24 hours.

Finally, the bottles were carefully removed, washed with running water, and the beer transferred to the cuvette, without stirring the sediment. The operation was carried out quickly, as it should not take more than a minute.

Using the turbidimeter equipment, it was possible to express the turbidity of the samples produced according to Example 1, with results indicated in EBC units, with one decimal place.

Lower values in EBC indicate lower turbidity, i.e., greater colloidal stability of the products. Ideally, a good result is indicated by the achievement of results < 1.5 EBC.

Table 2 indicates the values obtained with the analysis of the samples produced in Example 1, in quadruplicate, using the Forcing Test methodology.

**TABLE 2**

| Sample | Turbidity (EBC) | Average turbidity (EBC) |
|---|---|---|
| 1 | 1.3 | 1.3 |
| | 1.4 | |
| | 1.3 | |
| | 1.2 | |
| 2 | 1.8 | 1.7 |
| | 1.9 | |
| | 1.4 | |
| | 1.6 | |
| 3 | 1.4 | 1.4 |
| | 1.2 | |
| | 1.5 | |
| | 1.4 | |
| 4 | 1.8 | 1.9 |
| | 1.9 | |
| | 2.1 | |
| | 1.8 | |

With the results obtained and disclosed in Table 2, it was possible to prove that the application of low doses of concentrated liquid tannic acid solution promotes the desired technological and sensory advantages. This proves that the proposed formulation allows the tannic acid solution as described herein to remain stable and generates greater efficiency than a reference product in the market, the specific proline enzyme (endoprotease).

### EXAMPLE 3

### ANALYSIS OF BEER STABILITY DURING ITS SHELF LIFE

In order to confirm the performance of the tannic acid that is the object of the invention, kept in liquid form for one year, a comparative analysis of application was carried out with tannic acid in liquid form and in powder form with dilution in water (both freshly prepared), carried out in cold wort (dosing point A, indicated in Figure 2). The results are presented in Table 3, where A is sample 1 produced in Example 1, after one year of shelf life; B is the sample of liquid tannic acid, produced one day before the test; C is the sample of tannic acid powder; and D is the test without the addition of any type of tannic acid (white - evaluated for comparison purposes).

**TABLE 3**

| Sample | Sensitive proteins (EBC) |
|---|---|
| A | 4.06 |
| B | 4.14 |
| C | 4.69 |
| D | 10.26 |

With the results obtained and disclosed by Table 3, it was possible to prove that the product object of the invention maintained the desired performance, when compared to the liquid tannic acid produced on the previous day and the tannic acid powder diluted on the same day of the test, that is, it is a stable formulation.

## Claims

1. A CONCENTRATED LIQUID TANNIC ACID SOLUTION FOR APPLICATION IN BEER, **characterized by** comprising:
10% to 70% tannic acid powder (weight/weight);
1% to 55% grain alcohol (weight/weight); and
1% to 55% water (weight/weight).

2. The CONCENTRATED LIQUID TANNIC ACID SOLUTION, according to claim 1, **characterized by** comprising 15 to 63%, preferably 25% to 55% tannic acid powder (weight/weight).

3. The CONCENTRATED LIQUID TANNIC ACID SOLUTION, according to claim 1 or 2, **characterized by** comprising 5 to 52%, preferably 15% to 50% grain alcohol (weight/weight).

4. The CONCENTRATED LIQUID TANNIC ACID SOLUTION, according to claim 1, 2 or 3, **characterized by** comprising 5 to 52%, preferably 15% to 50% water (weight/weight).

5. The CONCENTRATED LIQUID TANNIC ACID SOLUTION, according to any of claims 1 to 4, **characterized by** being of plant origin and not genetically modified.

6. A COLLOIDAL STABILIZATION PROCESS, **characterized by** comprising the application of a solution of concentrated liquid tannic acid as defined in any of claims 1 to 5.

7. The PROCESS, according to claim 6, **characterized in that** the application of the solution occurs in a process line with the use of flow control, preferably after the cooling stage of the brewing wort and before inoculation of the yeast.

8. The PROCESS, according to claims 6 or 7, **characterized in that** the dosage of the solution is preferably done by a peristaltic pump system with automation integrated into the wort cooling system.

9. The PROCESS, according to any of claims 6 to 8, **characterized by** further comprising the cooling of the must to temperatures between 4 and 20°C, more preferably between 7 and 18°C, and even more preferably between 9 and 15°C.

10. The PROCESS, according to any of claims 6 to 9, **characterized in that** the cooling time occurs between 15 and 150 minutes, more preferably between 25 and 120 minutes, and more preferably still between 30 and 90 minutes.

11. The PROCESS, according to any of claims 6 to 10, **characterized in that** the dosage of the solution is from 1 to 50 g/hL, more preferably from 2 to 43 g/hL, and more preferably still from 3 to 38 g/hL.

12. The USE OF LIQUID TANNIC ACID SOLUTION, as **characterized by** any of claims 1 to 5, **characterized by** being in a colloidal stabilization process.

13. The USE, according to claim 12, **characterized in that** the colloidal stabilization process is as defined in any of claims 6 to 11.
